# EUROPÄISCHE PATENTSCHRIFT

(11) **EP 3 635 224 B1**
(45) Veröffentlichungstag und Bekanntmachung des Hinweises auf die Patenterteilung: **21.12.2022**
(21) Anmeldenummer: 18726976.6
(22) Anmeldetag: 23.05.2018
(51) Int. Cl.: F01M 1/16, F16N 13/20

(54) **FLÜGELZELLENPUMPE, FLUIDSYSTEM UND BRENNKRAFTMASCHINE**
VANE PUMP, FLUID SYSTEM, AND INTERNAL COMBUSTION ENGINE
POMPE À PALETTES, SYSTÈME FLUIDIQUE ET MOTEUR À COMBUSTION INTERNE

(30) Priorität: 06.06.2017 DE 102017209511
(43) Veröffentlichungstag der Anmeldung: 15.04.2020
(73) Patentinhaber: Volkswagen Aktiengesellschaft, 38440 Wolfsburg (DE)
(72) Erfinder: KRAMER, Björn, 38268 Lengede (DE); GUSINALI, Serhat, 38268 Lengede (DE); DOLTZE, Tobias, 38268 Lengede (DE); WITZEL, Florian, 38173 Erkerode (DE); GITT-GEHRKE, Andreas, 38104 Braunschweig (DE); SCHNECK, Christian, 38104 Braunschweig (DE)
(86) Internationale Anmeldenummer: PCT/EP2018/063466
(87) Internationale Veröffentlichungsnummer: WO 2018/224305

(56) Entgegenhaltungen:
- DE-A1-102009 039 776
- DE-A1-102014 226 151
- DE-T5-112007 001 037
- DE-U1- 20 113 784
- FR-A1- 2 862 354

## Beschreibung

Die Erfindung betrifft eine Flügelzellenpumpe mit einem Stator und einem Rotor, wobei der Rotor und der Stator relativ zueinander verlagerbar sind, um eine Einstellbarkeit der Förderleistung der Flügelzellenpumpe zu realisieren, die unabhängig von einer Antriebsdrehzahl des Rotors ist. Die Flügelzellenpumpe kann insbesondere als Schmiermittelpumpe einer Brennkraftmaschine vorgesehen sein.

Die Erfindung betrifft weiterhin ein Fluidsystem, insbesondere ein Schmiermittelsystem, mit einer solchen Flügelzellenpumpe sowie eine Brennkraftmaschine mit einem solchen Fluidsystem.

Eine Schmiermittelpumpe in Form einer Flügelzellenpumpe ist beispielsweise aus der DE 10 2005 034 712 A1 und der DE 11 2007 001037 T5 bekannt. Bei dieser ist in für Flügelzellenpumpen üblicher Weise ein mehrere Flügel aufweisender Rotor exzentrisch innerhalb eines Stators gelagert, wobei zwischen diesen ein sichelförmiger Förderraum ausgebildet ist, der mittels der Flügel des Rotors in mehrere Druckkammern unterteilt wird, wobei sich die Größen dieser Druckkammern innerhalb einer Umdrehung des Rotors zunächst vergrößern, wodurch ein Unterdruck erzeugt wird, der zu einem Ansaugen von Schmiermittel über einen entsprechend positionierten Einlasskanal führt, und sich anschließend wieder verkleinern, wodurch ein Überdruck erzeugt wird, der zu dem gewünschten Fördern des Schmiermittels zu der zu schmierenden Komponente führt. Der Stator selbst ist verlagerbar innerhalb eines Gehäuses der Flügelzellenpumpe angeordnet, wodurch die Möglichkeit geschaffen wird, das Ausmaß der Größenänderung, die die Druckkammern erfahren, und damit die Förderleistung der Schmiermittelpumpe zu ändern.

Die WO 2013/068531 A2 beschreibt einen regelbaren Flügelzellenverdichter, bei dem gekrümmt ausgebildete Flügel nicht radial verschiebbar in Aufnahmeschlitzen eines Grundkörpers des Rotors angeordnet sind, sondern in einer bezüglich der jeweils radialen Ausrichtung geneigten Ausrichtung drehbar an dem Grundkörper angeordnet sind. Eine Regelung der Verdichtungsleistung erfolgt in bekannter Weise durch eine Veränderung der Volumina der durch die Flügel begrenzten Druckkammern, die mit einer Veränderung der Winkelausrichtung der Flügel einhergeht.

Aus der DE 10 2009 008 865 A1 ist eine Schmierstoffpumpe mit zwei Förderstufen bekannt.

Der Erfindung lag die Aufgabe zugrunde, eine Flügelzellenpumpe insbesondere hinsichtlich der konstruktiven Ausgestaltung und/oder hinsichtlich des Wirkungsgrads zu verbessern.

Diese Aufgabe wird mittels einer Flügelzellenpumpe gemäß dem Patentanspruch 1 gelöst. Ein Fluidsystem mit einer solchen Flügelzellenpumpe und eine Brennkraftmaschine mit einem solchen Fluidsystem sind Gegenstände der Patentansprüche 8 und 9. Vorteilhafte Ausgestaltungen der erfindungsgemäßen Flügelzellenpumpe und damit des erfindungsgemäßen Fluidsystems und der erfindungsgemäßen Brennkraftmaschine sind Gegenstände der weiteren Patentansprüche und/oder ergeben sich aus der nachfolgenden Beschreibung der Erfindung.

Eine gattungsgemäße (ein- oder mehrflutige) Flügelzellenpumpe umfasst einen Stator und einen Rotor, wobei der Rotor und der Stator relativ zueinander verlagerbar sind, um eine Einstellbarkeit der Förderleistung der Flügelzellenpumpe zu realisieren, die unabhängig von einer Antriebsdrehzahl des Rotors ist. Der Rotor weist einen Grundkörper und eine Mehrzahl von über dem Umfang des Grundkörpers verteilt angeordneten Flügeln auf, die in einer radialen Richtung bezüglich einer Rotationsachse des Rotors verlagerbar an dem Grundkörper gehalten sind. Die Flügel unterteilen dabei mindestens einen von dem Stator und dem Grundkörper begrenzten Förderraum in mehrere Druckkammern, wobei innerhalb des (jedes) Förderraums eine Einlassmündung eines Einlasskanals und eine Auslassmündung eines Auslasskanals angeordnet sind. Erfindungsgemäß gekennzeichnet ist eine solche Flügelzellenpumpe dadurch, dass ein Endanschlag für die relative Verlagerbarkeit des Rotors und des Stator durch einen (direkten) Kontakt des Stators mit dem Rotor ausgebildet ist.

Als "Endanschlag" wird dabei ein die relative Verlagerbarkeit in einer Verlagerungsrichtung abschließend begrenzender, mechanischer Anschlag verstanden.

Als "Flügelzellenpumpe" beziehungsweise "Pumpe" wird erfindungsgemäß allgemein eine Fluidarbeitsmaschine verstanden, die zur Förderung von Fluiden, d.h. von Gasen und/oder Flüssigkeiten, vorgesehen ist, wobei eine Verwendung zur Förderung von Flüssigkeiten bevorzugt vorgesehen sein kann.

Vorzugsweise kann vorgesehen sein, dass der Rotor innerhalb des (teil-)ringförmigen Stators angeordnet ist und die Flügel weiterhin bevorzugt an einer Innenseite des Stators gleitend gelagert sind. Vorteilhaft umsetzbar ist aber auch eine Ausgestaltung, bei der der ringförmige Rotor den Stator umgibt und die Flügel vorzugsweise an einer Außenseite des Stators gleitend gelagert sind.

Als "Förderraum" wird erfindungsgemäß ein von dem Rotor und des Stator begrenztes (Teil-)Volumen verstanden, in dem bezüglich jeder einzelnen der durch die Flügel des Rotors voneinander separierten Druckkammern über einer vollständigen Umdrehung des Rotors einmalig sowohl ein Ansaugen als auch ein Ausstoßen von zu förderndem Fluid erfolgt. Eine einflutige Flügelzellenpumpe umfasst somit lediglich einen einzelnen Förderraum, der von der gesamten Außenseite des Rotors insgesamt und der gesamten Innenseite des Stators begrenzt wird, wobei über einer vollständigen Umdrehung des Rotors bezüglich jeder einzelnen der Druckkammern nur einmalig ein Ansaugen sowie ein Ausstoßen von Fluid erfolgt. Bei einem doppelflutigen Flügelzellenverdichter, wie er beispielsweise in der WO 2013/068531 A2 offenbart ist, begrenzen der Stator und der Rotor dagegen zwei Förderraume, in denen jeweils über einer vollständigen Umdrehung des Rotors bezüglich jeder einzelnen der Druckkammern ein Ansaugen sowie ein Ausstoßen von Fluid erfolgt.

Unter der Angabe, wonach die Flügel "in einer radialen Richtung bezüglich einer Rotationsachse des Rotors verlagerbar an dem Grundkörper gehalten" sind, ist zu verstehen, dass sich zumindest die den Stator kontaktierenden Enden der Flügel hinsichtlich des radialen Abstands von der Rotationsachse verlagern können. Hierzu kann vorzugsweise vorgesehen sein, dass die Flügel verschiebbar in radial bezüglich der Rotationsachse des Rotors ausgerichteten, vorzugsweise schlitzförmigen Aufnahmen des Grundkörpers angeordnet sind, wobei nicht erforderlich (aber bevorzugt vorgesehen) ist, dass die Flügel und/oder die diese verschiebbar aufnehmenden Aufnahmen des Rotors eine exakt radiale Ausrichtung bezüglich der Rotationsachse des Rotors aufweisen. Vielmehr ist hierfür eine Ausrichtung ausreichend, die zumindest eine solche exakt radiale Richtungskomponente umfasst.

In einer möglichen Ausgestaltungsform einer erfindungsgemäßen Flügelzellenpumpe kann auch eine schwenkbare Halterung der Flügel an dem Grundkörper, wie es von dem Flügelzellenverdichter gemäß der WO 2013/068531 A2 bekannt ist, vorgesehen sein.

Durch die erfindungsgemäß vorgesehene Ausbildung des Endanschlags für die relative Verlagerbarkeit des Rotors und Stators durch einen Kontakt des Stators mit dem Rotor kann auf die Ausgestaltung eines alternativen Anschlags, insbesondere eines von einem Gehäuse der Flügelzellenpumpe ausgebildeten Anschlags für den Stator verzichtet werden, wodurch eine relativ einfache konstruktive Ausgestaltung für eine erfindungsgemäße Flügelzellenpumpe erreicht werden kann. Auch kann sich eine erfindungsgemäße Flügelzellenpumpe durch ein vorteilhaftes akustisches Betriebsverhalten beim Einstellen des durch einen Kontakt des Stators mit dem Rotor ausgebildeten Endanschlags auszeichnen, da eine Relativbewegung von Stator und Rotor vor diesem Kontakt durch zwischen dem Stator und dem Rotor befindliches Fluid gebremst und demnach der Kontaktstoß gedämpft werden kann.

Vorzugsweise kann vorgesehen sein, dass der Endanschlag durch einen direkten oder indirekten, dann unter Zwischenschaltung zumindest eines der Flügel erfolgenden Kontakt des Stators mit dem Grundkörper des Rotors ausgebildet ist. Eine solche Ausgestaltung einer erfindungsgemäßen Flügelzellenpumpe ist zum einen konstruktiv einfach umsetzbar. Zum anderen kann dadurch die kürzeste Distanz zwischen dem Stator und dem Grundkörper (in demjenigen Abschnitt, der einen Übergang zwischen dem Hochdruckabschnitt und dem Niederdruckabschnitt des/eines Förderraums der Flügelzellenpumpe darstellt) bei wirksamem Endanschlag und folglich die Menge des in den einzelnen Druckräumen von dem Hochdruckabschnitt in den Niederdruckabschnitt rückgeförderten Fluids (sogenanntes Totvolumen) minimiert werden, wodurch ein relativ guter Wirkungsgrad für den Betrieb der Flügelzellenpumpe erreicht werden kann. Eine Minimierung des Totvolumens ermöglicht weiterhin eine möglichst kleine Dimensionierung einer Flügelzellenpumpe unter Berücksichtigung einer Vorgabe bezüglich einer maximalen Förderleistung. Kontaktiert der Stator bei wirksamem Endanschlag den Grundkörper des Rotors direkt, beträgt die kürzeste Distanz null, so dass dann auch das Totvolumen minimiert ist. Andererseits könnte mit einem solchen direkten Kontakt zwischen Stator und Grundkörper des Rotors ein relativ großer Reibungswiderstand verbunden sein, der einen Wirkungsgradvorteil aufgrund des minimierten Totvolumens wieder zumindest teilweise kompensieren könnte. Vorzugsweise kann daher ein indirekter Kontakt zwischen dem Stator und dem Grundkörper des Rotors unter Zwischenschaltung mindestens eines der Flügel vorgesehen sein, wobei gleichzeitig die kürzeste Distanz zwischen dem Stator und dem Grundkörper des Rotors (die im Bereich des oder der den indirekten Kontakt bewirkenden Flügel(s) vorliegt) größer null ist. Gleichzeitig sollte diese kürzeste Distanz jedoch so klein wie möglich dimensioniert sein, so dass einerseits ein direkter Kontakt zwischen dem Stator und dem Grundkörper des Rotors und folglich auch damit verbundene Reibungsverluste vermieden werden und andererseits das Totvolumen minimal gehalten wird.

Gemäß einer bevorzugten Ausgestaltungsform einer erfindungsgemäßen Flügelzellenpumpe kann vorgesehen sein, dass die Flügel mittels mindestens eines Beaufschlagungselements des Rotors gegen den Stator beaufschlagt sind, wobei dieses Beaufschlagungselement vorzugsweise derart ausgebildet ist, dass durch dieses die Flügel unter elastischer Vorspannung gegen den Stator beaufschlagt sind. Alternativ besteht aber auch die Möglichkeit, dass die Flügel ausschließlich aufgrund von auf diese infolge einer Drehung des Rotors wirkenden Fliehkräften gegen den Stator beaufschlagt sind.

Gemäß einer weiterhin bevorzugten Ausgestaltungsform einer erfindungsgemäßen Flügelzellenpumpe kann vorgesehen sein, dass der Stator und/oder der Rotor (jeweils) mittels eines oder mehrerer Federelemente in Richtung des Endanschlags beaufschlagt ist/sind. Durch das oder die Federelemente wird die Flügelzellenpumpe somit selbsttätig in Richtung einer Förder(end)stellung verstellt, in der der Endanschlag wirksam ist, sofern nicht mittels einer aktiv beeinflussbaren beziehungsweise steuerbaren Einstellvorrichtung der Stator unter zunehmender Vorspannung des oder der Federelemente relativ zu dem Rotor verlagert wird, um eine alternative Förderstellung einzustellen.

Weiterhin bevorzugt kann vorgesehen sein, dass bei wirksamem Endanschlag eine maximale spezifische Förderleistung der Flügelzellenpumpe eingestellt ist beziehungsweise im Betrieb der Flügelzellenpumpe erreicht wird. Dadurch wird erreicht, dass bei einer Störung der Einstellvorrichtung die Flügelzellenpumpe selbsttätig eine Förderstellung einstellt, in der die spezifische Förderleistung maximal ist, wodurch eine so genannte failsafe-Funktionalität realisiert werden kann. Dies gilt insbesondere in Verbindung mit einer Beaufschlagung des Stators und/oder des Rotors mittels eines oder mehrerer Federelemente in Richtung dieses Endanschlags

Eine Einstellvorrichtung, durch die eine Relativverlagerung von Stator und Rotor realisierbar ist, kann vorzugsweise derart ausgebildet sein, dass der Rotor und/oder der Stator (direkt oder indirekt, d.h. unter Zwischenschaltung mindestens eines weiteren Elements) mit insbesondere einem Gehäuse der Flügelzellenpumpe einen Druckraum veränderlicher Größe begrenzt. Der Druckraum kann dafür vorgesehen sein, dass in diesen ein Fluid eingeleitet wird, wobei sich in Abhängigkeit von der Höhe des Drucks des Fluids in dem Druckraum eine definierte Relativanordnung zwischen Stator und Rotor einstellt. Die Höhe des Drucks in dem Druckraum kann dabei insbesondere eine Kraft erzeugen, die einer Federkraft eines oder mehrerer, den Stator und/oder den Rotor beaufschlagender Federelemente entgegenwirkt, um eine einem Gleichgewicht dieser Kräfte entsprechende Förderstellung für die Flügelzellenpumpe einzustellen.

Gemäß einer bevorzugten Ausgestaltungsform einer erfindungsgemäßen Flügelzellenpumpe, bei der zudem die Flügel verschiebbar in radial bezüglich der Rotationsachse des Rotors ausgerichteten, vorzugsweise schlitzförmigen Aufnahmen des Grundkörpers angeordnet sind und bei der weiterhin der Stator und der Grundkörper des Rotors indirekt unter Zwischenschaltung mindestens eines der Flügel kontaktieren, kann besonders bevorzugt vorgesehen sein, dass der zumindest eine Flügel, der mit dem einen Ende den Stator kontaktiert, zur Ausbildung des Endanschlags (mit insbesondere dem anderen Ende) an dem Grund der dazugehörigen Aufnahme anschlägt. Dies stellt eine besonders einfache konstruktive Ausgestaltung zur Erzielung eines indirekten Kontakts zwischen dem Stator und dem Grundkörper des Rotors dar.

Ein erfindungsgemäßes Fluidsystem umfasst zumindest eine erfindungsgemäße Flügelzellenpumpe und zumindest einen Fluidkreislauf, in dem ein Fluid mittels der Flügelzellenpumpe förderbar ist.

Eine erfindungsgemäße Brennkraftmaschine umfasst zumindest ein erfindungsgemäßes Fluidsystem und einen in den Fluidkreislauf des Fluidsystems integrierten Verbrennungsmotor.

Bei dem Fluidsystem kann es sich beispielsweise um ein Schmiermittelsystem handeln, in dem zumindest zeitweise ein flüssiges Schmiermittel gefördert werden soll, so dass für eine erfindungsgemäße Brennkraftmaschine vorzugsweise eine Fluidverbindung zwischen dem Einlasskanal der Flügelzellenpumpe und einem Schmiermittelreservoir vorgesehen sein kann. Alternativ kann es sich bei dem Fluidsystem um beispielsweise ein Kühlsystem der Brennkraftmaschine handeln, wobei das zu fördernde Fluid dann eine Kühlflüssigkeit sein kann.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungsbeispielen näher erläutert. In den Zeichnungen zeigt:
- Fig. 1:: eine schematische Darstellung einer erfindungsgemäßen Brennkraftmaschine;
- Fig. 2:: einen Querschnitt durch eine erfindungsgemäße Flügelzellenpumpe;
- Fig. 3:: den in der Fig. 2 mit III gekennzeichneten Ausschnitt in vergrößerter Darstellung; und
- Fig. 4:: den in der Fig. 2 mit IV gekennzeichneten Ausschnitt (unter Weglassung eines Beaufschlagungselements eines Rotors der Flügelzellenpumpe) in vergrößerter Darstellung.

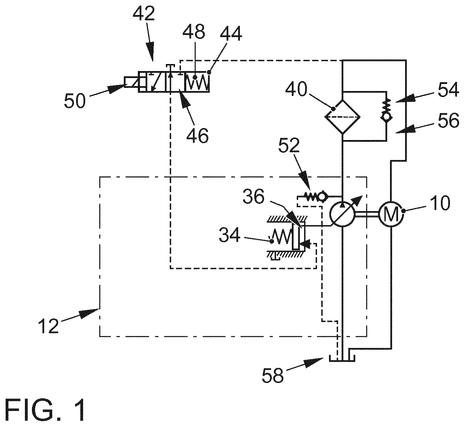

Die Fig. 1 zeigt in schematischer Darstellung eine erfindungsgemäße Brennkraftmaschine. Diese umfasst einen Verbrennungsmotor 10 sowie ein erfindungsgemäßes Fluidsystem mit einem Fluidkreislauf. Bei dem Fluidkreislauf kann es sich beispielsweise um einen Schmiermittelkreislauf handeln, der unter anderem der Versorgung des Verbrennungsmotors 10 mit Schmiermittel dient.

In den Fluidkreislauf des Fluidsystems ist weiterhin eine erfindungsgemäße Flügelzellenpumpe 12 integriert, durch die ein Fluid in dem Fluidkreislauf gefördert werden kann. Dazu saugt die Flügelzellenpumpe 12 das Fluid aus einem Fluidreservoir 58 an und drückt dieses unter erhöhtem hydraulischem Druck in den stromab der Flügelzellenpumpe 12 angeordneten Abschnitt des Fluidkreislaufs.

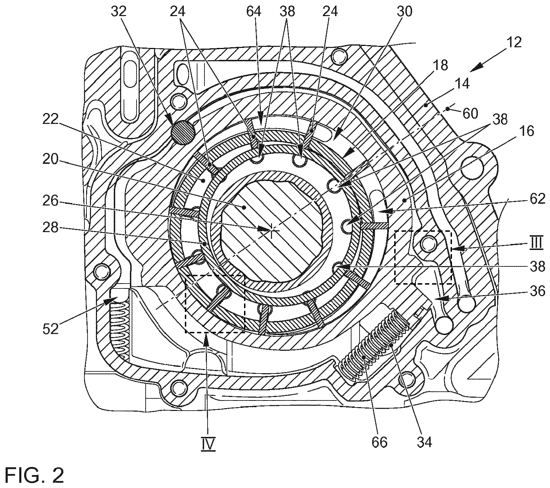

Die Flügelzellenpumpe 12 ist gemäß der Fig. 2 als hinsichtlich der spezifischen Förderleistung veränderbar ausgebildet. Dazu umfasst diese ein Gehäuse 14, innerhalb dessen ein in einem Abschnitt ringförmig ausgebildeter Stator 16 schwenkbar gelagert ist, wobei der Stator 16 ein Innenvolumen begrenzt, innerhalb dessen ein Rotor 18 angeordnet ist.

Bei der Brennkraftmaschine gemäß der Fig. 1 wird der Rotor 18 der Flügelzellenpumpe 12 direkt oder unter Zwischenschaltung eines Getriebes von dem Verbrennungsmotor 10 selbst angetrieben. Es besteht jedoch auch die Möglichkeit eines andersartigen Antriebs des Rotors 18, beispielsweise mittels eines separaten Antriebsmotors, der insbesondere elektromotorisch ausgebildet sein kann.

Der Rotor 18 umfasst neben einer Antriebswelle 20 einen im Wesentlichen zylindrischen Grundkörper 22, der drehfest mit der Antriebswelle 20 verbunden ist. Über dem Umfang des Grundkörpers 22 verteilt sind eine Mehrzahl (hier konkret 11) von sich radial und parallel zu der Rotationsachse 26 des Rotors 18 erstreckenden Aufnahmen 38 vorgesehen, in denen jeweils ein Flügel 24 des Rotors 18 in (exakt) radialer Richtung bezüglich der Rotationsachse 26 verschiebbar angeordnet ist. Die Aufnahmen 38 umfassen jeweils einen schlitzförmigen Abschnitt, in denen die plattenförmigen, ebenen Flügel 24 in radialer Ausrichtung bezüglich der Rotationsachse 26 geführt sind, sowie jeweils einen den Grund der entsprechenden Aufnahme 38 ausbildenden, zylindrischen Abschnitt, dessen Durchmesser größer als die Breite des dazugehörigen schlitzförmigen Abschnitts ist. Ein innerhalb des Grundkörpers 22 angeordnetes, ringförmiges Beaufschlagungselement 28, bestehend aus einem relativ hochelastischen Werkstoff, beispielsweise einem Elastomer, beaufschlagt die Flügel 24 des Rotors 18 in radialer Richtung nach außen, wodurch diese mit ihren bezüglich des Beaufschlagungselements 28 distalen Stirnseiten gegen die das Innenvolumen begrenzende Innenseite des Stators 16 beaufschlagt sind.

In allen möglichen (Schwenk-)Stellungen des Stators 16 innerhalb des Gehäuses 14 (gegebenenfalls mit Ausnahme einer Nullstellung, in der die Förderleistung der Flügelzellenpumpe 12 trotz eines rotierenden Antriebs des Rotors 16 im Wesentlichen Null beträgt) ist die Rotationsachse 26 des Rotors 18 dezentral bezüglich einer Mittelachse des von dem Stator 16 begrenzten Innenvolumens angeordnet. Dadurch ist zwischen der das Innenvolumen begrenzenden Innenseite des Stators 16 und der Außenseite des Grundkörpers 22 des Rotors 18 ein im Querschnitt sichelförmiger Förderraum 30 begrenzt, der mittels der Flügel 24 des Rotors 18 in Druckkammern unterteilt ist, deren Volumina sich im Betrieb der Flügelzellenpumpe 12 zyklisch ändern.

In der Fig. 2 ist eine Betriebsstellung der Flügelzellenpumpe 12 dargestellt, in der die Exzentrizität des Rotors 18 bezüglich des Innenvolumens des Stators 16 maximal ist, so dass die Außenseite des Grundkörpers 22 des Rotors 18 an einem Umfangsabschnitt die Innenseite des Stators 16 nahezu kontaktiert. In der Fig. 2 ist dieser Umfangsabschnitt durch die Lage einer (gedachten) Trennebene 60 visualisiert, wobei die Trennebene 60 insgesamt die Unterteilung des durch die Innenseite des Stators 16 und die Außenseite des Rotors 18 begrenzten Förderraums 30 in einen Unterdruckabschnitt und einen Überdruckabschnitt aufzeigt.

Bei einem Rotationsantrieb des Rotors 18 entgegen dem Uhrzeigersinn gemäß der Fig. 2 stellt der bezüglich der Trennebene 60 rechts dargestellte Abschnitt des Förderraums 30 den

Unterdruckabschnitt dar, in dem sich die radiale Breite des Förderraums 30 in Drehrichtung des Rotors 18 kontinuierlich vergrößert, wodurch in denjenigen Druckkammern, die durch die sich in dem Unterdruckabschnitt befindlichen Flügel 24 begrenzt sind, bei einer Rotation des Rotors 18 ein Unterdruck erzeugt wird, der zu einem Ansaugen von Fluid über eine Einlassmündung 62 eines Einlasskanals, die in dem Unterdruckabschnitt des Förderraums 30 angeordnet ist, führt.

Dagegen verkleinert sich die radiale Breite des in der Fig. 2 links dargestellten Überdruckabschnitts bezüglich der Drehrichtung des Rotors 18, wodurch der Druck des Fluids, das in den dortigen Druckkammern vorhanden ist, bei einer Rotation des Rotors 18 erhöht wird. Dies führt zu einem Ausstoßen dieses Fluids über eine Auslassmündung 64 eines Auslasskanals, die in dem Überdruckabschnitt des Förderraums 30 angeordnet ist.

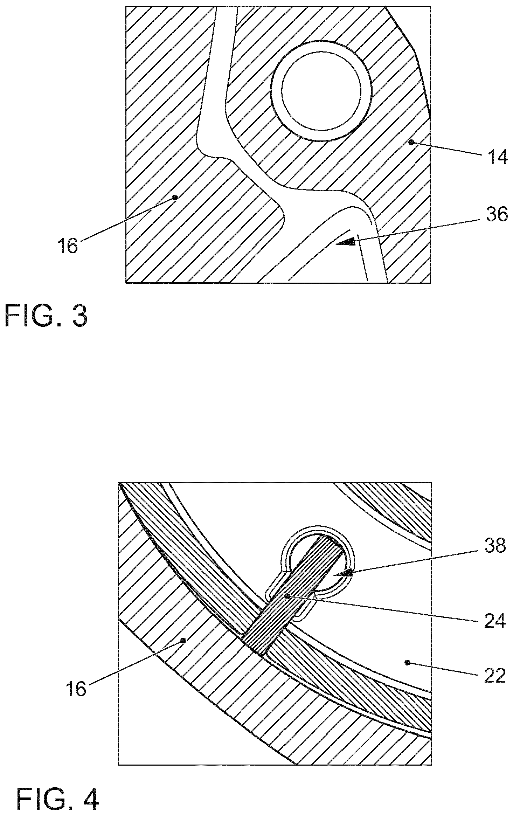

Infolge der maximal möglichen Exzentrizität des Rotors 18 bezüglich des Stators 16 gemäß der Fig. 2 ist in der entsprechenden Förderstellung der Flügelzellenpumpe 12 auch die jeweilige Größenänderung in dem Unterdruckabschnitt und in dem Überdruckabschnitt des Förderraums 30 größtmöglich. Dies führt zu einer maximalen spezifischen Förderleistung der Flügelzellenpumpe 12. In Richtung dieser Stellung wird der Stator 16, der mittels eines Schwenkgelenks 32 in dem Gehäuse 14 gelagert ist, durch ein auf Druck vorgespanntes Federelement 34 in Form einer auf einem Führungsbolzen 66 geführten, zylindrischen Schraubenfeder beaufschlagt. Das Federelement 34 beaufschlagt demnach den Stator 16 in eine Stellung, die der maximalen spezifischen Förderleistung der Flügelzellenpumpe 12 entspricht, wobei diese Stellung durch die Ausbildung eines Endanschlags für das Verschwenken des Stators 16 definiert beziehungsweise in Wechselwirkung mit dem Federelement 34 gehalten ist. Dieser Endanschlag wird erfindungsgemäß durch einen direkten Kontakt des Stators 16 mit dem Rotor 18 ausgebildet, wobei ein indirekter Kontakt beziehungsweise Anschlag zwischen dem Stator 16 und dem Grundkörper 22 des Rotors 18 unter Zwischenschaltung mindestens eines der Flügel 24 vorgesehen ist, wie sich insbesondere aus der Fig. 4 ergibt. Demnach kontaktiert der in der Fig. 4 dargestellte Flügel 24 nicht nur mit dem einen stirnseitigen Ende die Innenseite des Stators 16 sondern auch mit dem anderen stirnseitigen Ende den Grund der dazugehörigen Aufnahme 38 des Grundkörpers 22, so dass der Flügel 24 als Zwischenelement dient, über das der Stator 16 an dem Grundkörper 22 des Rotors 18 abgestützt ist. Dabei ist ein Überstand der Flügel 24 hinsichtlich der Außenseite des Grundkörpers 22 (bei den Grund der Aufnahme 38 kontaktierender Stellung) derart dimensioniert, dass ein möglichst minimaler, jedoch stets vorhandener Spalt auch im Bereich der Trennebene 60, in der die Distanz zwischen dem Stator 16 und dem Grundkörper 22 des Rotors 18 minimal ist, ausgebildet ist. Dies gilt auch bei einer Rotation des Rotors 18, indem durch eine geeignete Dimensionierung hinsichtlich des Überstands der Flügel 24 und hinsichtlich der Teilung zwischen den benachbarten Flügeln 24 stets sichergestellt ist, dass bei einer Beaufschlagung des Stators mittels des Federelements 34 bis in die entsprechende Endstellung mindestens ein Flügel 24 als Zwischenelement zur indirekten Abstützung des Stators 16 an dem Grundkörper 22 des Rotors 18 dient und gleichzeitig die Breite des Spalts im Bereich der Trennebene 16 nicht bis auf null reduziert ist.

Für eine Veränderung beziehungsweise Verkleinerung der spezifischen Förderleistung der Flügelzellenpumpe 12 muss der Stator 16 unter zunehmender Vorspannung des Federelements 34 aus der in der Fig. 2 dargestellten Stellung verschwenkt werden. Dies erfolgt hydraulisch, indem einem Druckraum 36 Fluid mit einem Druck zugeführt wird, der unter Berücksichtigung der Fläche, über der dieser Druck wirksam ist, zu einer der Rückstellkraft des Federelements 34 entgegenwirkenden Kraft führt, die temporär größer als diese Rückstellkraft ist. Ein Verschwenken des Stators 16 erfolgt dann so weit, bis wieder ein Kräftegleichgewicht zwischen der druckbedingten Kraft und der mit zunehmender Vorspannung des Federelements 34 ansteigenden Rückstellkraft erreicht ist.

Eine Steuerung oder Regelung der spezifischen Förderleistung der Flügelzellenpumpe 12 erfolgt demnach mittels eines veränderlichen hydraulischen Drucks in dem Druckraum 36, wobei dieser hydraulische Druck bei einer Brennkraftmaschine gemäß der Fig. 1 mittels einer entsprechenden Fluidverbindung in einem (Referenz-)Abschnitt des Fluidkreislaufs abgegriffen wird, der einerseits stromauf oder innerhalb des Verbrennungsmotors 10, beispielsweise in einem Fluidkanal, der in einen Zylinderkopf oder ein Zylindergehäuse des Verbrennungsmotors 10 integriert ist, und andererseits stromab eines Fluidfilters 40 angeordnet ist. Dabei wird eine Zufuhr von Fluid in den Druckraum 36 mittels eines Steuerventils 42 gesteuert, das in die Fluidverbindung integriert ist.

Das Steuerventil 42 weist einen in einem Ventilgehäuse 44 verschiebbaren Ventilköper auf, der mit dem Ventilgehäuse 44 einen Steuerdruckraum 46 veränderlicher Größe begrenzt. Dieser Steuerdruckraum 46 ist über einen Abschnitt der Fluidverbindung mit dem Referenzabschnitt des Fluidkreislaufs und damit indirekt mit dem Hochdruckabschnitt der Flügelzellenpumpe 12 verbunden. Der hydraulische Druck des Fluids in dem Steuerdruckraum 46 des Steuerventils 42 erzeugt eine Kraft auf den Ventilkörper, die einer Rückstellkraft eines vorgespannten Federelements 48 des Steuerventils 42 entgegenwirkt. Übersteigt diese hydraulisch erzeugte Kraft infolge einer Förderung von Fluid durch die Flügelzellenpumpe 12 über dem Bedarf des Verbrennungsmotors 10 die Rückstellkraft des Federelements 48 so weit, dass das Steuerventil 42 umgeschaltet wird, wird der erste Druckraum 36 mit dem Referenzabschnitt des Fluidkreislaufs verbunden. Der so erzeugte, relativ hohe hydraulische Druck in dem Druckraum 36 führt dann zu einem Schwenken des Stators 16 innerhalb des Gehäuses 14 der Flügelzellenpumpe 12 und folglich zu einer Verringerung der spezifischen Förderleistung der Flügelzellenpumpe 12 in Abhängigkeit von dem konkreten hydraulischen Druck in dem Referenzabschnitt des Fluidkreislaufs. Mittels des Steuerventils 42 wird folglich eine Selbstregelung der spezifischen Förderleistung der Pumpe 12 in Abhängigkeit von dem hydraulischen Druck des von der Flügelzellenpumpe 12 geförderten Fluids realisiert.

Um eine möglichst exakte Anpassung der absoluten Förderleistung der Flügelzellenpumpe 12 an den Fluidbedarf des Verbrennungsmotors 10 (und gegebenenfalls an den Fluidbedarf anderer in den Fluidkreislauf integrierter Komponenten) zu erreichen, kann das Steuerventil 42 ergänzend auch mittels eines aktiv ansteuerbaren Aktors 50 umgeschaltet werden. Dabei kann ein Ansteuern des Aktors 50 insbesondere in Abhängigkeit von verschiedenen (gemessenen oder auf andere Weise ermittelten) Betriebsparametern der Brennkraftmaschine mittels einer nicht dargestellten Steuervorrichtung (insbesondere einer Motorsteuerung der Brennkraftmaschine) erfolgen.

Insbesondere nach einem Kaltstart der Brennkraftmaschine bei relativ niedrigen Umgebungstemperaturen und folglich bei einer relativ hohen Viskosität des Fluids (insbesondere bei einem Schmiermittel relevant) kann es dazu kommen, dass die Flügelzellenpumpe 12 infolge eines kurzfristig oder unmittelbar nach dem Kaltstart vorliegenden Antriebs des Verbrennungsmotors 10 mit relativ hohen Betriebsdrehzahlen und in Kombination mit der durch das Federelement 34 eingestellten Stellung des Stators 16, die zu einer maximalen spezifischen Förderleistung führt, eine relativ hohe absolute Förderleistung aufweist, die infolge der relativ schlechten Fließfähigkeit des Fluids (Schmiermittels) zu einem hohen hydraulischen Druck in dem Hochdruckabschnitt der Flügelzellenpumpe 12 und in dem sich direkt daran anschließenden Abschnitt des Fluidkreislaufs (insbesondere in dem sich bis zu dem Fluidfilter 40 erstreckenden Abschnitt) führt, während der hydraulische Druck in dem Referenzabschnitt des Fluidkreislaufs, in dem die das Steuerventil 42 integrierende Fluidverbindung abgeht, deutlich darunter liegt. Dies könnte zu einer vergleichsweise hohen Belastung der Flügelzellenpumpe 12 und der Fluidleitungen in dem sich an die Flügelzellenpumpe 12 unmittelbar anschließenden Abschnitt des Fluidkreislaufs sowie zu einem unnötig hohen Antriebswiderstand für den Verbrennungsmotor 10, der durch die Flügelzellenpumpe 12 erzeugt wird, führen. Da der hydraulische Druck in dem Referenzabschnitt des Fluidkreislaufs dann deutlich niedriger als in dem Hochdruckabschnitt der Flügelzellenpumpe 12 ist, kann über den hydraulischen Druck in dem Druckraum 36 keine geeignete Regelung der spezifischen Förderleistung der Flügelzellenpumpe 12 erreicht werden.

Um diesen Nachteil zu vermeiden ist ein Druckbegrenzungsventil 52 vorgesehen, das direkt und in möglichst naher Anordnung mit dem Hochdruckabschnitt des Förderraums 30 verbunden ist. Das Druckbegrenzungsventil 52, das vorzugsweise in Form eines einfachen Rückschlagventils ausgebildet ist, öffnet beim Überschreiten eines Grenzwerts des hydraulischen Drucks in dem Hochdruckabschnitt des Förderraums 30 und leitet dadurch einen Teil des von der Flügelzellenpumpe 12 geförderten Fluids in das Fluidreservoir 58 zurück.

Der Fluidfilter 40 der Brennkraftmaschine gemäß der Fig. 1 ist mittels eines über ein Rückschlagventil 54 gesteuerten Bypasses 56 umgehbar ausgeführt, um insbesondere bei einer Verstopfung des Fluidfilters 40 eine ununterbrochene und ausreichende Versorgung des Verbrennungsmotors 10 mit dem Fluid zu gewährleisten.

### BEZUGSZEICHENLISTE

- 10: Verbrennungsmotor
- 12: Flügelzellenpumpe
- 14: Gehäuse
- 16: Stator
- 18: Rotor
- 20: Antriebswelle
- 22: Grundkörper des Rotors
- 24: Flügel
- 26: Rotationsachse des Rotors
- 28: Beaufschlagungselement des Rotors
- 30: Förderraum
- 32: Schwenkgelenk
- 34: Federelement der Pumpe
- 36: Druckraum
- 38: Aufnahme des Grundkörpers
- 40: Fluidfilter
- 42: Steuerventil
- 44: Ventilgehäuse
- 46: Steuerdruckraum
- 48: Federelement des Steuerventils
- 50: Aktor
- 52: Druckbegrenzungsventil
- 54: Rückschlagventil
- 56: Bypass
- 58: Fluidreservoir
- 60: Trennebene
- 62: Einlassmündung
- 64: Auslassmündung
- 66: Führungsbolzen

## Patentansprüche

1. Flügelzellenpumpe (12) mit einem Stator (16) und einem Rotor (18), wobei der Rotor (18) und der Stator (16) relativ zueinander verlagerbar sind, um eine Einstellbarkeit der Förderleistung der Flügelzellenpumpe (12) zu realisieren, die unabhängig von einer Antriebsdrehzahl des Rotors (18) ist, und wobei der Rotor (18) einen Grundkörper (22) und eine Mehrzahl von über dem Umfang des Grundkörpers (22) verteilt angeordneten Flügeln (24) aufweist, die in einer radialen Richtung bezüglich einer Rotationsachse (26) des Rotors (18) verlagerbar an dem Grundkörper (22) gehalten sind, **dadurch gekennzeichnet, dass** ein Endanschlag für die relative Verlagerbarkeit des Rotors (18) und des Stator (16) durch einen Kontakt des Stators (16) mit dem Rotor (18) ausgebildet ist.

2. Flügelzellenpumpe (12) gemäß Anspruch 1, **dadurch gekennzeichnet, dass** der Endanschlag durch einen direkten oder durch einen indirekten, dann unter Zwischenschaltung zumindest eines der Flügel (24) erfolgenden Kontakt des Stators (16) mit dem Grundkörper (22) des Rotors (18) ausgebildet ist.

3. Flügelzellenpumpe (12) gemäß Anspruch 1 oder 2, **dadurch gekennzeichnet, dass** der Stator (16) und/oder der Rotor (18) mittels eines oder mehrerer Federelemente (34) in Richtung des Endanschlags beaufschlagt ist/sind.

4. Flügelzellenpumpe (12) gemäß einem der vorhergehenden Ansprüche, **dadurch gekennzeichnet, dass** bei wirksamem Endanschlag eine maximale spezifische Förderleistung der Flügelzellenpumpe (12) eingestellt ist.

5. Flügelzellenpumpe (12) gemäß einem der vorhergehenden Ansprüche, **dadurch gekennzeichnet, dass** der Rotor (18) und/oder der Stator (16) mit einem Gehäuse (14) der Flügelzellenpumpe (12) einen Druckraum (36) veränderlicher Größe begrenzt.

6. Flügelzellenpumpe (12) gemäß einem der vorhergehenden Ansprüche, **dadurch gekennzeichnet, dass** die Flügel (24) verschiebbar in radial bezüglich der Rotationsachse (26) des Rotors (18) ausgerichteten Aufnahmen (38) des Grundkörpers (22) angeordnet sind.

7. Flügelzellenpumpe (12) gemäß Anspruch 2 oder einem der von Anspruch 2 abhängigen Ansprüche und gemäß Anspruch 6, **dadurch gekennzeichnet, dass** der zumindest eine Flügel (24) zur Ausbildung des Endanschlags durch einen indirekten Kontakt des Stators (16) mit dem Grundkörper (22) an dem Grund der dazugehörigen Aufnahme (38) anschlägt.

8. Fluidsystem mit einer Flügelzellenpumpe (12) gemäß einem der vorhergehenden Ansprüche und mit einem Fluidkreislauf, in dem ein Fluid mittels der Flügelzellenpumpe (12) förderbar ist.

9. Brennkraftmaschine mit einem Fluidsystem gemäß Anspruch 8 und mit einem in den Fluidkreislauf integrierten Verbrennungsmotor (10).

## Claims

1. A vane pump (12) having a stator (16) and a rotor (18), wherein the rotor (18) and the stator (16) are displaceable relative to one another in order to realize an adjustment capability of the pump capacity of the vane pump (12) which is independent of a drive speed of the rotor (18), and wherein the rotor (18) has a base body (22) and a plurality of vanes (24) arranged so as to be distributed over the circumference of the base body (22), which vanes are held so as to be displaceable on the base body (22) in a radial direction with respect to an axis of rotation (26) of the rotor (18), **characterized in that** an end stop for the relative displaceability of the rotor (18) and of the stator (16) is formed by a contact of the stator (16) with the rotor (18).

2. The vane pump (12) according to claim 1, **characterized in that** the end stop is formed by a direct or by an indirect contact of the stator (16) with the base body (22) of the rotor (18), said indirect contact taking place via interposition of at least one of the vanes (24).

3. The vane pump (12) according to claim 1 or 2, **characterized in that** the stator (16) and/or the rotor (18) is/are charged in the direction of the end stop by means of one or more spring elements (34).

4. The vane pump (12) according to any one of the preceding claims, **characterized in that,** given an active end stop, a maximum specific pump capacity of the vane pump (12) is set.

5. The vane pump (12) according to any one of the preceding claims, **characterized in that** the rotor (18) and/or the stator (16), with a housing (14) of the vane pump (12), delimits a pressure chamber (36) of variable size.

6. The vane pump (12) according to any one of the preceding claims, **characterized in that** the vanes (24) are arranged so as to be displaceable in receptacles (38) of the base body (22) which are aligned radially with respect to the axis of rotation (26) of the rotor (18).

7. The vane pump (12) according to claim 2 or any one of the claims dependent on claim 2, and according to claim 6, **characterized in that** the at least one vane (24) abuts the base of the associated receptacle (38) to form the end stop via an indirect contact of the stator (16) with the base body (22).

8. A fluid system with a vane pump (12) according to any one of the preceding claims, and with a fluid circuit in which a fluid can be conveyed by means of the vane pump (12).

9. An internal combustion engine with a fluid system according to claim 8, and with an internal combustion engine (10) integrated into the fluid circuit.

## Revendications

1. Pompe à palettes (12) comprenant un stator (16) et un rotor (18), le rotor (18) et le stator (16) pouvant être déplacés l'un par rapport à l'autre pour pouvoir ajuster la capacité de refoulement de la pompe à palettes (12), qui est indépendante d'une vitesse d'entraînement du rotor (18) et le rotor (18) présentant un corps de base (22) et une pluralité de palettes (24) réparties sur la périphérie du corps de base (22) et maintenues sur le corps de base (22) de manière à pouvoir être déplacées dans une direction radiale par rapport à un axe de rotation (26) du rotor (18), **caractérisée en ce qu'**une butée de fin de course pour le déplacement relatif du rotor (18) et du stator (16) est formée par un contact du stator (16) avec le rotor (18).

2. Pompe à palettes (12) selon la revendication 1, **caractérisée en ce que** la butée de fin de course est formée par un contact du stator (16) avec le corps de base (22) du rotor (18), se formant de manière directe ou indirecte, à savoir par l'intermédiaire d'au moins une des palettes (24).

3. Pompe à palettes (12) selon la revendication 1 ou 2,
**caractérisée en ce que** le stator (16) et/ou le rotor (18) est/sont sollicité(s) au moyen d'un ou de plusieurs éléments de ressort (34) en direction de la butée de fin de course.

4. Pompe à palettes (12) selon l'une quelconque des revendications précédentes, **caractérisée en ce que** lorsque la butée de fin de course est active, une capacité de refoulement spécifique maximale de la pompe à palettes (12) est réglée.

5. Pompe à palettes (12) selon l'une quelconque des revendications précédentes, **caractérisée en ce que** le rotor (18) et/ou le stator (16) délimite(nt) avec un boîtier (14) de la pompe à palettes (12) un espace de pression (36) d'une taille variable.

6. Pompe à palettes (12) selon l'une quelconque des revendications précédentes, **caractérisée en ce que** les palettes (24) sont agencées de manière à pouvoir être déplacées dans des cavités (38) du corps de base (22) orientées radialement par rapport à l'axe de rotation (26) du rotor (18).

7. Pompe à palettes (12) selon la revendication 2 ou l'une quelconque des revendications dépendant de la revendication 2 et selon la revendication 6, **caractérisée en ce que** l'au moins une palette (24), pour la formation de la butée de fin de course par un contact indirect du stator (16) avec le corps de base (22) vient en butée sur le fond de la cavité (38) associée.

8. Système fluidique comprenant une pompe à palettes (12) selon l'une quelconque des revendications précédentes et comprenant un circuit de fluide, dans lequel un fluide peut être refoulé au moyen de la pompe à palettes (12).

9. Moteur à combustion interne comprenant un système fluidique selon la revendication 8 et comprenant un moteur thermique (10) intégré dans le circuit de fluide.
